(19) Europäisches Patentamt
European Patent Office
Office européen des brevets

(11) EP 2 703 914 A1

(12) **EUROPEAN PATENT APPLICATION**

(43) Date of publication:
05.03.2014 Bulletin 2014/10

(51) Int Cl.:
*G05B 13/02* (2006.01)        *F03D 7/02* (2006.01)
*H02P 9/00* (2006.01)

(21) Application number: 12183616.7

(22) Date of filing: 07.09.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 13.10.2011 EP 11401614

(71) Applicant: **Institute of Nuclear Energy Research
Atomic Energy Council
Longtan Township, Taoyuan County (TW)**

(72) Inventor: **Ou, Ting-Chia
Jiaan Village
Longtan Township
Taoyuan County (TW)**

(74) Representative: **Lang, Christian et al
LangPatent
Anwaltskanzlei
Rosenheimer Strasse 139
81671 München (DE)**

(54) **Hybrid control system and method for automatic voltage regulator**

(57) A hybrid system and method, which integrates an automatic voltage regulator (AVR) and a power system stabilizer (PSS) of a generator, are provided. The functions of an AVR excitation control model and a PSS model are combined, so as to hybridize fuzzy sliding mode control and a recurrent radial basis function network (RRBFN) of synchronous on line learning into a control system and method for an AVR. With the hybrid control of the two models, optimum operation and output of the PSS are achieved. As the actions of the AVR and the PSS are generally dynamically linked and have influence on each other, in the system and method, a feedback signal for additional control is preferentially transferred through the PSS model to suppress the low-frequency oscillation of the generator, and increase damping to the electromechanical oscillation of the power system, so as to strengthen the dynamic stability of the power system. Compared with a conventional proportional-integral control method, the control method is rapid, and achieves real-time control of the output of the generator especially in the case of disturbance occurred to the power system, thus having a better stability and performance. The system and method are applicable to the development of optimum algorithms for power output and configurations of a hybrid smart grid, and provides overall construction of the power generation system and power energy management.

FIG. 4

**Description**

**BACKGROUND OF THE INVENTION**

**Field of Invention**

The present invention relates to a hybrid algorithm for an automatic voltage regulator (AVR), and particularly to using a fuzzy sliding mode control and a radial basis function network (RBFN) as driving control of a power system stabilizer (PSS) to control the output power. Through hybrid control of the two modes, optimum stable operation of a power generation system is achieved by on line learning of a recurrent radial basis function network (RRBFN).

**Related Art**

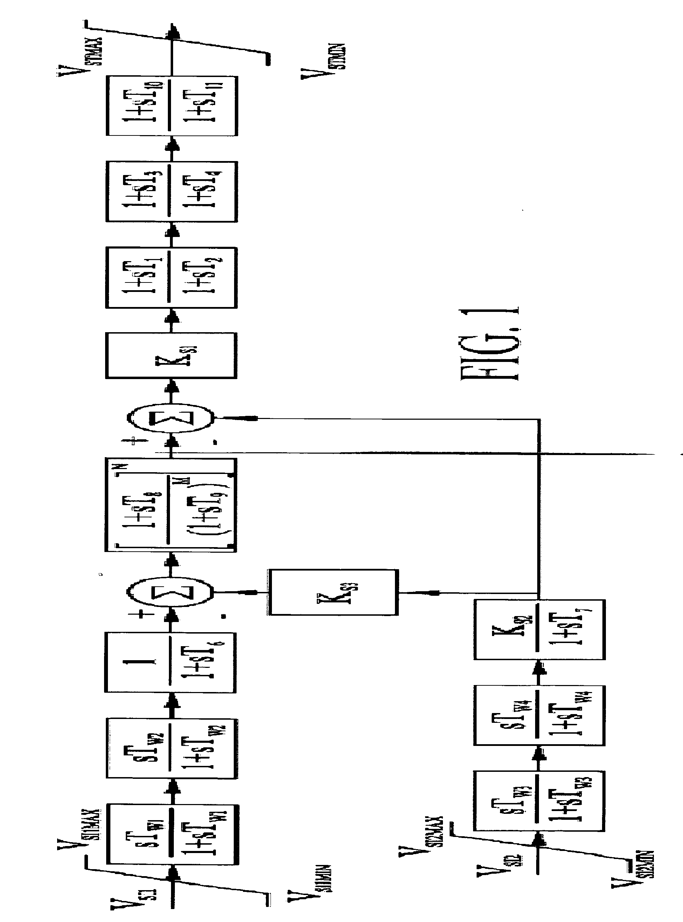

FIG. 1 shows a power system stabilizer (PSS) model of a conventional automatic voltage regulating system, which is a Proportional-Integral-Derivative (PID) controller that is regulated based on a deviation signal, and is a regulator most widely used in a continuous system. Under a normal operation condition of a power system, a voltage at a terminal of a generator is a negative feedback closed loop, in this case, an excitation regulation system is stable, and when oscillation occurs to a power angle of a rotor, the phase of an excitation current provided by the excitation system lags behind the power angle of the rotor. At a certain oscillation frequency, the lag angle is up to 180°, causing the original negative feedback to become positive feedback, that is, the variation of the excitation current leads to the oscillation of the power angle of the rotor, and causes the so-called "negative damping". At this time, the excitation system can regulate the current in an excitation field by using a conventional PID control mode by a deviation signal of the voltage of the generator, provides a lead phase output, compensates the lag phase of the excitation current and overcomes the negative damping torque, so as to improve the dynamic and static stability of the voltage of the generator. However, the PID control mode is designed mainly for a voltage deviation signal, in which the voltage deviation should be continuously regulated in order to control the voltage, so the change from positive to negative of the damping torque cannot be discriminated, causing that the generated lead phase frequency regulation may be not in-phase with the low-frequency oscillation frequency, that is, the requirement for a positive damping torque may not be ensured. Therefore, the PID control and regulation mode has a quite limited effect on suppression of the low-frequency oscillation of the system.

Referring to FIG. 1, $T_6$, and $T_7$ are PSS transducer time constants, $T_1$, $T_3$, and $T_{10}$ are PSS lead compensating time constants, $T_2$, $T_4$, and $T_{11}$ are PSS lag compensating time constants, $K_{S1}$, $K_{S2}$, and $K_{S3}$ are PSS gains, $T_{W1}$, $T_{W2}$, $T_{W3}$, $T_{W4}$, and $T_{W5}$ are PSS time constants, $V_{S1}$, $V_{SI1}$, and $V_{SI2}$ are PSS inputs, and $V_{ST}$ is PSS output equivalent of terminal voltage.

**SUMMARY OF THE INVENTION**

The present invention provides a hybrid algorithm for an AVR, which uses fuzzy sliding mode control and an RBFN as driving control of a PSS, so as to control an output power of the PSS. Through hybrid control of the two modes, optimum stable operation of the power generation system is achieved. Compared with a conventional proportional-integral (PI) control method, the control method provided in the present invention is rapid, applicable to in time control of the power generation system in the case of a disturbed rotation speed, and has a good stability and performance. The PSS mentioned in the present invention feeds a system frequency (rotation speed) variation signal or an effective power variation signal back to an excitation system, so as to compensate insufficient damping after quick response of the high-speed excitation system.

In a large power system, as regions are connected by using a power transmission line, when disturbance occurs to a certain region in the system, the power transmission of other regions will also be affected. In 1969, scholars DeMello and Concordia in America proposed an occurrence mechanism of low-frequency oscillation and discussed the reason of dynamic instability caused by a quick excitation system under particular parameter conditions of the power system, and considered after analysis that the unstable positive damping torque of the system is mainly caused by the lag characteristic of the excitation system and an excitation winding of a generator. Under normal operation conditions of the power system, a terminal voltage at a generator is a negative feedback closed loop, and in this case, an excitation regulation system is stable. When oscillation occurs to a power angle of a rotor, the lag angle is caused to be up to 180° at a certain oscillation frequency, causing the original negative feedback to become positive feedback, that is, the variation of the excitation current leads to the oscillation of the power angle of the rotor. At this time, the excitation system can regulate the current in an excitation field by using a conventional PID control mode by a deviation signal of the voltage of the generator, provides a lead phase output, compensates the lag phase of the excitation current and overcomes the negative damping torque, so as to improve the stability of the generator. However, the PID control mode is designed mainly for a voltage deviation signal, in which the voltage deviation should be continuously regulated in order to control the stability of the voltage, causing that the generated lead phase frequency regulation may not meet the phase required for compensating the negative damping at low-frequency oscillation, and may not ensure the requirement for a positive damping torque. Therefore, the power system always needs to add a PSS, so as to suppress the low-frequency oscillation of the system and improve the dynamic stability of the power system.

The dynamic stability of the power system is an important factor for system safety operation, and it can be found in literatures relating to dynamic stability that if the systems in all regions are interconnected by a weak connection circuit, when disturbance occurs, a low-frequency oscillation mode, also referred to as an electromechanical oscillation mode, can be observed in the system. The PSS is designed for improving the stability of the generator, the control function of the PSS is exerted in cooperation with the excitation system. The low-frequency oscillation mode generally has a low and even a negative damping ratio, in which a negative damping ratio causes the system to be at a potential risk of breakdown, and even a slight disturbance may excite a low-frequency oscillation at 0.1-2 Hz, so the security of the system is greatly threatened. Therefore, the control by PSS aims to provide a positive damping coefficient to suppress the swing of the angle of the rotor of the generator, and feed back the system frequency (rotation speed) variation signal or the effective power variation signal to the excitation system to compensate the insufficient damping after the quick response of the high-speed excitation system. As in the regulation by the PSS, one or two signals of a rotation speed deviation, a power deviation, and a frequency deviation is used as an additional control signal, the damping to the electromechanical oscillation of the power system is increased by suppressing the low-frequency oscillation of the generator by introducing an additional feedback signal, so as to increase the dynamic stability of the power system. In design, in order to avoid the decrease of the synchronous torque, the PSS has an under-compensation design, so as to enhance the damping of the dynamic stability of the generator and the system, and strength the synchronous torque of the transient stability of the generator.

Generally, a digital AVR has a high gain property of quick response. As the high-gain AVR can decrease the damping of the electromechanical oscillation of the system, when the system is out of synchronism transiently or due to serious disturbance resulting from failure of the power network, a suitable PSS model is connected to improve the transient stability, in order that the generator or the power system can be rapidly stabilized without affecting the quick response of the AVR. However, the conventional PSS still adopts the PID control and regulation mode, in which, by adding to a system function a control feature that makes the system lead or lag, a transfer function of the whole system is changed, that is, the position of a polar point of the system function is changed, so that an entire root locus of the generator is controlled in a left half plane, and the generator is forced to compensate the transient damping of the system in any state to eliminate the occurrence of instable oscillation.

Taiwan Power Company finds that the power in the north region is lower than about 2.8 GW when a large unit is disabled in a nuclear power plant in the north region, so by using the hybrid algorithm for the AVR provided in the present invention, the reliability for power supply and the stability of the power system in the north region can be improved. Moreover, a simulation result proves that the method proposed in the present invention is programmable and efficient, and has the advantages of being quick and robust. The control method by PSS provided in the AVR according to the present invention can be used to stabilize the power output of the generator, and also be widely used to stabilize the power system when multiple units operate in parallel, so as to extend the application range of the method in a smart grid system.

The present invention provides a hybrid AVR algorithm combining an excitation control model and a PSS model. Through an RBFN, recurrent synchronous on line learning of the PSS model is performed and fuzzy sliding mode control is hybridized so as to form the hybrid control algorithm of the AVR. Through hybrid control of the two modes, most stable operation and output of the generator are achieved, which is suitable for use in analysis strategy of a large-scale power generation system. The method provided in the present invention is programmable and efficient, and has the advantages of being quick and robust. Furthermore, the method provided in the present invention is sufficiently expandable, to which other models such as equivalent models of other algorithms can be introduced, and the control method by PSS provided in the internal control model of the AVR can be used to stabilize the power output of the generator, and also be widely used to stabilize the power system when multiple units of distributed generators operate in parallel, so as to extend the application range of the method. Compared with other conventional method, the system and method of the present invention has good robustness for stability analysis of distributed power generation system.

## BRIEF DESCRIPTION OF THE DRAWINGS

The present invention will become more fully understood from the detailed description given herein below for illustration only, and thus are not limitative of the present invention, and wherein:

FIG. 1 shows the prior art;

FIG. 2 shows a conventional ESST1A model;

FIG. 3 shows conventional PSS2B model;

FIG. 4 shows a structural view of a hybrid AVR model;

FIG. 5 shows an RBFN model;

FIG. 6 shows a schematic view of leaning architecture of a recurrent RBFN; and

FIG. 7 shows a schematic view of a PSS model when multiple units operate in parallel.

## DETAILED DESCRIPTION OF THE INVENTION

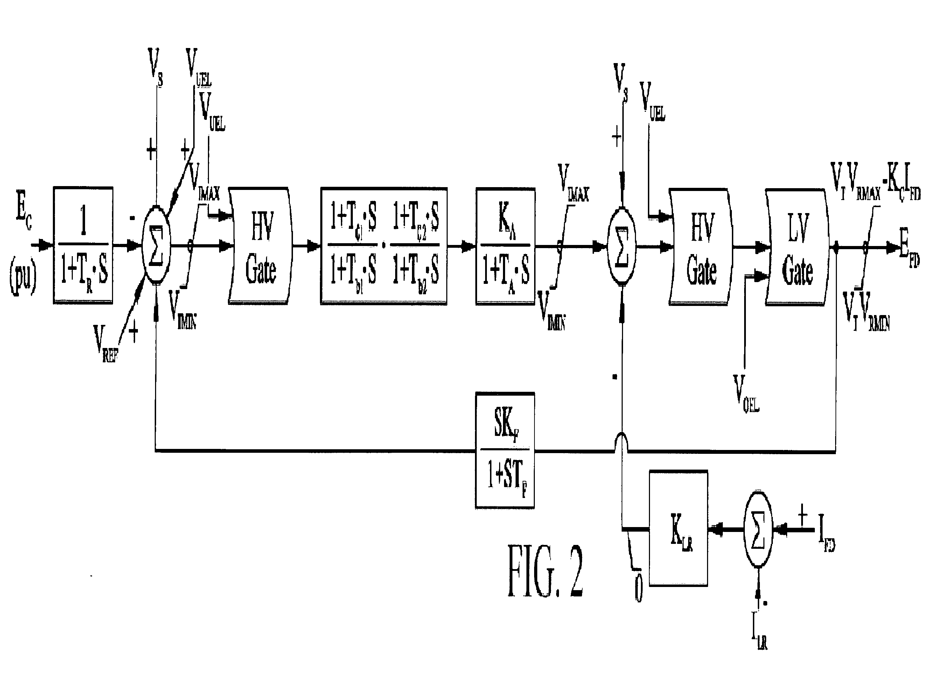

An AVR conventionally used in Taiwan Power Company is a static excitation system (Type ST), which adopts a conventional ESST1A model as shown in FIG. 2. Because an initial limit setting is gain represented by $I_{LR}$, if the limit is allowed to be ignored, $K_{LR}$ is allowed to be set to "0". As shown in FIG. 2, related parameters of two electrical static excitation systems after test are as follows: $K_F$=0, $K_A$ =767, $V_{IMIN}$=-5, $V_{IMAX}$=5, $V_{AMIN}$=-6.4, and $V_{AMAX}$=7.6.

A conventional ESST1A model is as shown in FIG. 2, in which $E_C$ is an input voltage signal, OEL is an over excitation limiter, UEL is an under excitation limiter, T is a time constant, $T_R$ is a regulator input filter time constant, $K_A$ is a voltage regulator gain, $K_F$ is an excitation control system stabilizer gain, $K_{LR}$ is an exciter output current limiter gain, $V_{AMAX, AMIN}$ are maximum and minimum voltage regulator outputs, $V_{RMAX, RMIN}$ are maximum and minimum voltage regulator outputs, $V_{IMAX}$, $V_{IMIN}$ are voltage regulator input limits, $V_{REF}$ is a voltage regulator reference voltage, $V_T$ is a synchronous machine terminal voltage, $V_S$ is summed terminal voltage and reference signals, HV /LV Gate is a module output of a higher/lower one of the two inputs (model block with two inputs and one output, the output always corresponding to the higher/lower of the two inputs), $I_{LR}$ is an exciter output current limit reference, $I_{FD}$ is a synchronous machine field current, and $E_{FD}$ is an exciter output voltage.

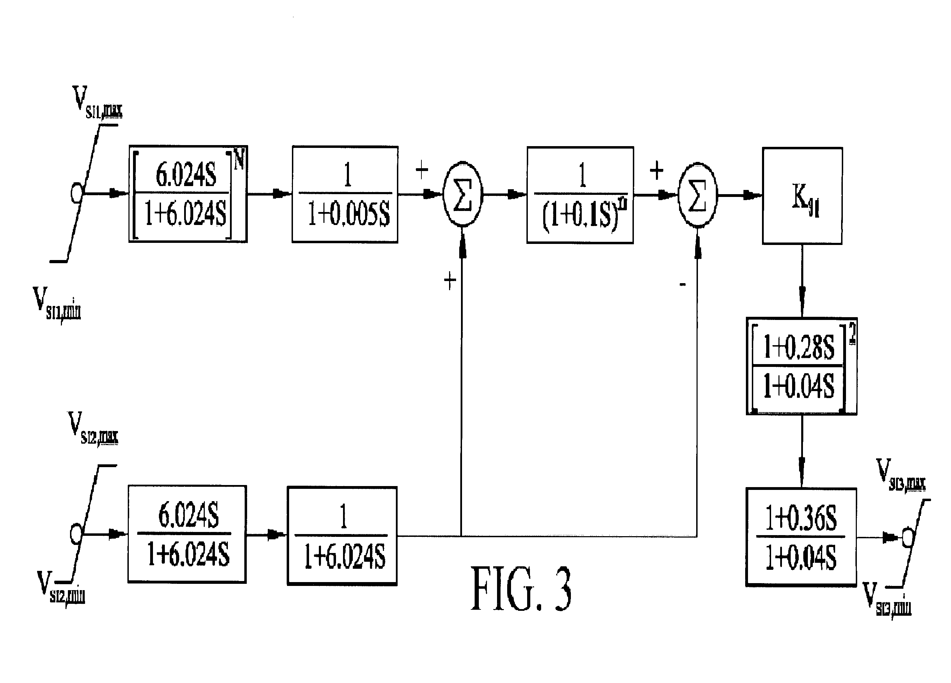

A PSS model conventionally used in Taiwan Power Company is shown in FIG. 3, in which a size of an overall PSS signal can be set through $K_{S1}$, and a rapid and correct stabilizer design can be achieved through frequency domain analysis. After operation test of the PSS model in a nuclear power plant in Taiwan Power Company, it is found that related upper- and lower-limit parameters of a PSS2B model are $V_{SI2,MAX}$=1.5 and $V_{SI2,MIN}$=0.1.

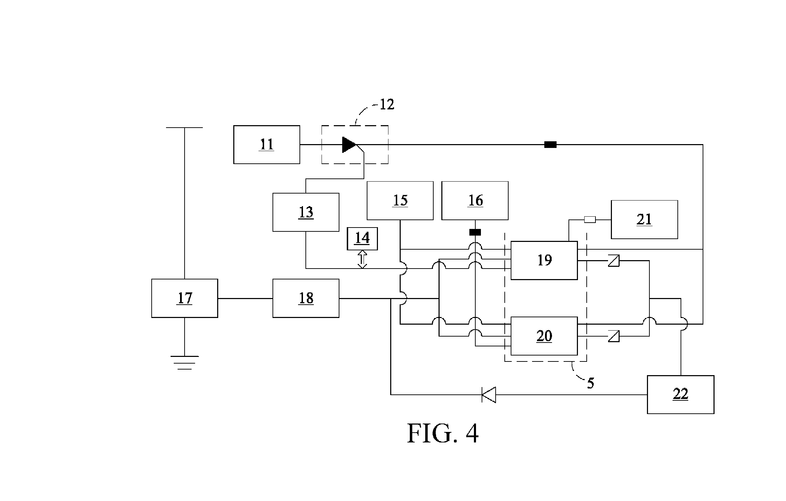

FIG. 4 is a schematic view of an automatic voltage regulation and power stabilization control system of a large generator set. A preferred embodiment of the present invention is shown in FIG. 4. In the system, an AVR, a PSS and a software algorithm function are built in a hybrid control module. As shown in FIG. 4, the system includes a permanent-magnetic alternating current generator 11, a three-phase full wave silicon controlled rectifier (SCR) 12, a rectifying function module and gate function module 13, a network communication unit 14, a rapid transmission module 15, a local control unit 16, a generator 17, an excitation system 18, a control device 5, a maintenance unit 21, and a battery 22. One end of the excitation system 18 is connected to the generator 17, and an other end is connected to the control device. The control device 5 generates a voltage regulation signal and a power stabilization signal by fuzzy sliding mode control algorithm and an algorithm of an RRBFN of a synchronous on line learning.

In this embodiment, the control device 5 may include a pair of control modules 19 and 20 that monitor and support each other, and each control module 19 or 20 has an AVR and a PSS. The AVR is coupled to the excitation system, generates the voltage regulation signal according to an algorithmic result of the fuzzy sliding mode control, and feeds back the voltage regulation signal to the excitation system. The PSS is coupled to the excitation system and connected to the AVR, generates the power stabilization signal having a variable system frequency (rotation speed) or a variable effective power according to the RRBFN of the synchronous on line learning, and feeds back the power stabilization signal to the excitation system, so as to compensate insufficient damping after quick response of the excitation system, where the PSS may have an under-compensation design, so as to avoid the decrease of synchronous torque at the same time, and enhance the damping of the system dynamic stability of the generator, thereby increasing the transient stability of the generator. In another embodiment, the PSS further uses at least one signal of a rotation speed deviation, a power deviation, and a frequency deviation as an additional control signal, and feeds back the additional control signal to the excitation system, so as to compensate the quick response of the excitation system. The control device further uses the fuzzy sliding mode control and the RBFN as the driving control of the PSS, and preferentially transfers the additional control signal to the excitation system, so as to lower the system transient by increasing the system damping.

Each of the control modules 19 and 20 may perform the synchronous on line learning of the PSS model through the RBFN, and hybridize the fuzzy sliding mode control, so as to form the hybrid control algorithm for AVR. Through hybrid control of the two modes, most stable operation and output of the generator are achieved. Generally, the hybrid control module has the functions of parameter setting and adjustment, active and reactive power compensation, software activation and automatic follow up control, various limitations and protections, PID control and PSS.

**EP 2 703 914 A1**

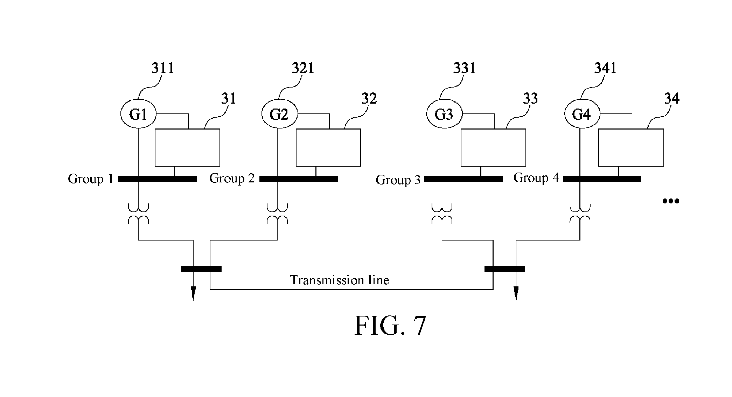

Another preferred embodiment of the present invention is shown in FIG. 7, a plurality of combined modules, including a hybrid AVR1 indicated by 31 and a generator G1 indicated by 311, a hybrid AVR2 indicated by 32 and a generator G2 indicated by 321, a hybrid AVR3 indicated by 33 and a generator G3 indicated by 331, and a hybrid AVR4 and a generator G4 indicated by 341, can be respectively used for control and regulation of an entire power network. Each of the hybrid AVR1-4 includes a permanent-magnetic alternating current generator, a three-phase full wave silicon controlled rectifier (SCR), a rectifying function module, a gate function module, a network communication unit, a rapid transmission module, a local control unit, an excitation system, a control device, a maintenance unit and a battery, as shown in FIG. 4. Similarly, one end of the excitation system of the hybrid AVR1-4 is connected to the generator and coupled to the control device. In FIG. 7, generator sets in a first group of generator sets (311, 31, 321, 32) are connected in parallel, generator sets in a second group of generator sets (331, 33, 341, 34) are connected in parallel, and the second group of generator sets is electrically connected to the first group of generator set by a power transmission line, so that the first group of generator sets (311, 31, 321, 32) and the second group of generator sets (331, 33, 341, 34) can electrically support each other.

The present invention provides a hybrid AVR model, in which fuzzy sliding mode controller model related variables are defined as follows:

$$x_1(t) = \Delta\omega(t) \tag{1}$$

$$\dot{x}_1(t) = -\dot{\omega}_r(t) = -x_2(t) \tag{2}$$

where
$\Delta\omega$ is an angular velocity difference of a rotor; and
$\omega_r$ is an angular velocity of the rotor of the generator; and
a steady state power output of the generator as follows:

$$\begin{bmatrix} \dot{x}_1(t) \\ \dot{x}_2(t) \end{bmatrix} = \begin{bmatrix} 0 & -1 \\ 0 & -B/J \end{bmatrix} \begin{bmatrix} x_1(t) \\ x_2(t) \end{bmatrix} + \begin{bmatrix} 0 \\ -K_t/J \end{bmatrix} \dot{i}(t) + \begin{bmatrix} 0 \\ 1/J \end{bmatrix} \dot{T}_m \tag{3}$$

which is expressed as

$$\dot{X}(t) = AX(t) + BU(t) + D\dot{T}_m \tag{4}.$$

When disturbance is considered, the equation may be expressed as follows:

$$\dot{X}(t) = (A + \Delta A)X(t) + (B + \Delta B)U(t) + (D + \Delta D)\dot{T}_m \tag{5}$$

in which $\Delta A$, $\Delta B$, and $\Delta D$ are expressed by parameters $J$, $B$, $K_t$, and $T_m$;
where $J$ is an inertia moment;
$T_m = K_t i(t)$ is a mechanical torque; and
$B$ is a friction coefficient of the generator.

The equation (5) can be rewritten as

$$\dot{X}(t) = AX(t) + B(U(t) + F(t)) \tag{6}$$

where $F(t)$ is an lumped variation factor and is expressed as follows:

5

$$F(t) = B^{-1}\Delta AX(t) + B^{-1}\Delta BU(t) + B^{-1}(D + \Delta D)\dot{T}_m \qquad (7)$$

and according to the equation (7), F(t) is a switch interface in overall operation, and is directly expressed by system parameters *A* and *B*.

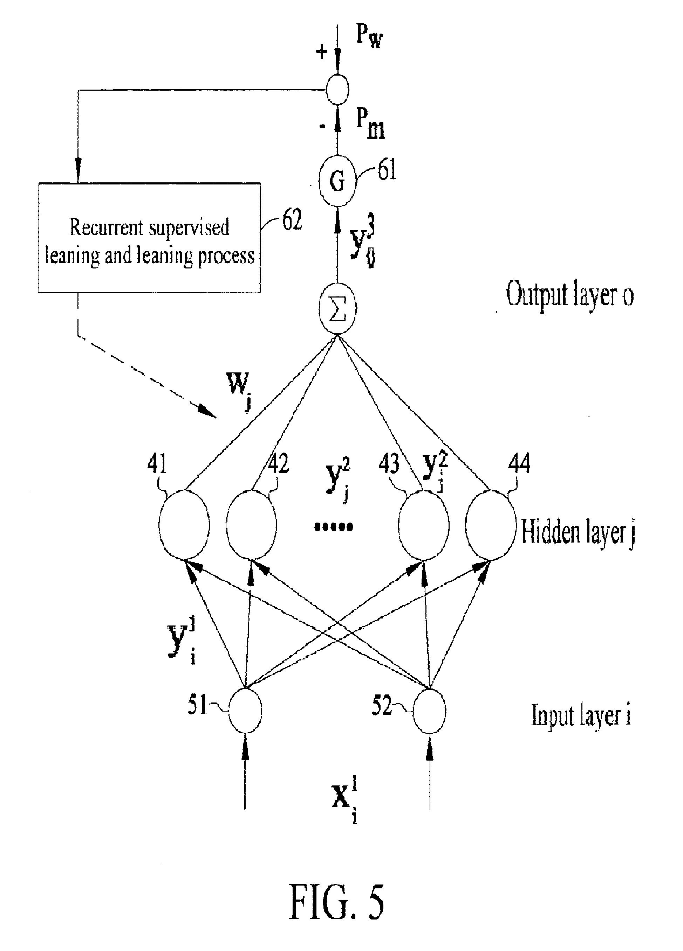

The RRBFN of the synchronous on line learning includes (a) the control device implementing an algorithm of the RBFN; and (b) the control device implementing a synchronous on line learning algorithm. In the PSS model provided in the present invention, the RBFN is a 3-layer neutral network as shown in FIG. 5. In the present invention, the RBFN is designed for tracing of the output power of the power generation system, and because the RBFN has an adaptation ability, the RBFN is very suitable for use in a nonlinear system.

Architecture of the RBFN includes 3 layers, which are an input layer, a hidden layer, and an output layer respectively.

A first layer: input layer

For an $i^{th}$ nerve cell in the input layer, input and output are as follows:

$$net_i^1 = x_i^1(N)$$

$$y_i^1(N) = f_i^1\left(net_i^1(N)\right) = net_i^1(N) \quad i = 1,2 \qquad (8)$$

where

$x_i^1$ is an input signal of the first input layer;

$y_i^1$ is an output signal of the first input layer

$f_i^1$ is a transition function of the first input layer;

$net^1_i$ is a first-layer network node function;

*N* is a number of iterations of the neutral network.

A second layer: hidden layer

A basis function form of the hidden layer includes multiple forms, such as a linear function, a Gaussian function, a logic function, and an exponential function, and a most common Gaussian function is used herein. When data is input into a network, the input vector is directly transmitted by the input layer to each radial basis function in the hidden layer, that is, after a distance from the input vector to a central point of each nerve cell in the second hidden layer is calculated, the function is transformed to obtain an output from each nerve cell in the hidden layer, and the input and output are as follows:

$$net_j^2(N) = -(X - M_j)^T \sum\nolimits_j (X - M_j)$$

$$y_j^2(N) = f_j^2\left(net_j^2(N)\right) = exp\left(net_j^2(N)\right) \qquad j = 1,...,9 \qquad (9)$$

wherein

$$M_j = \begin{bmatrix} m_{1j} & m_{2j} & \cdots & m_{ij} \end{bmatrix}^T, \quad \Sigma_j = diag\begin{bmatrix} 1/\sigma_{1j}^2 & 1/\sigma_{2j}^2 & \cdots & 1/\sigma_{ij}^2 \end{bmatrix}^T$$

$y_j^2$ is an output signal of the second hidden layer;

$f_j^{\cdot 2}$ is a transform function in the second hidden layer;

$m_{ij}$ is an average of an $i$th nerve cell corresponding to a function to which a $j$th nerve cell belongs in the hidden layer;

$\sigma_{ij}$ is a standard deviation of an $i$th nerve cell corresponding to a function to which a $j$th nerve cell belongs in the hidden layer;

$net^2_j$ is a second-layer network node function;

$N$ is a number of iterations of the RBFN.

<u>A third layer: output layer</u>

Each nerve cell in the layer is marked with $\Sigma$, indicating that all signals input into the nerve cell are totaled. For an $o$th nerve cell in the output layer, input and output are as follows:

$$net_o^3 = \sum_j w_j y_j^2(N)$$

$$y_o^3(N) = f_o^3\left(net_o^3(N)\right) = net_o^3(N) \tag{10}$$

Where:

$y_o^3$ is an output value of the third network layer;

$f_0^{\cdot 3}$ is a transition function of the third output layer;

$w_j$ is a weight of a $j$th nerve cell in the hidden layer to the output layer;

$net^3_0$ is a third-layer network node function;

$N$ is a number of iterations of the RBFN.

In addition, the synchronous on line learning algorithm is implementing, by the control device, a supervised learning and training process, and in a recursive stage, a weight of the RBFN is corrected according to an algorithm of a law of gradient descent, and by the correction of the weight, the output of the RBFN approaches an expected output value.

The synchronous on line learning algorithm is a leaning algorithm based on a dynamic back-propagation algorithm; and the control device calculate a back-propagated error by using the third output layer first, and in order to describe the on line learning rule of the RBFN, an error calculation formula needs to be defined first, and a error function E is as shown below:

$$E = \frac{1}{2}\left(P_w - P_m\right)^2 \tag{11}$$

where:

$P_w$ is an expected output power; and

$P_m$ is an actual on line output power.

The learning algorithm based on the dynamic back-propagation algorithm is as follows.

<u>Output layer (third layer)</u>: update the weight $w_j$

The back-propagated error is:

$$\delta_o = -\frac{\partial E}{\partial net_o^3} = \left[ -\frac{\partial E}{\partial y_o^3} \frac{\partial y_o^3}{\partial net_o^3} \right] \tag{12}$$

where $\delta_o$ is a back-propagated error; and

$y_o^3$ is an output signal of the third output layer.

A linking weight between the output layer and the hidden layer is updated and iterated each time as follows:

$$\Delta w_j = -\frac{\partial E}{\partial w_j} = \left[ -\frac{\partial E}{\partial y_o^3} \frac{\partial y_o^3}{\partial net_o^3} \right] \left( \frac{\partial net_o^3}{\partial w_j} \right) = \delta_o y_j^2 \tag{13}$$

where $w_j$ is a weight of a $j^{th}$ nerve cell in the hidden layer to the output layer hidden layer.

The linking weight between the output layer and the hidden layer may be adjusted according to a formula below:

$$w_j(N+1) = w_j(N) + \eta_w \Delta w_j \tag{14}$$

where $\eta_w$ is a learning rate of the weight between the output layer and the hidden layer.

<u>The hidden layer (the second layer)</u>: update the weights $m_{ij}$ and $\sigma_{ij}$

An Gaussian function average of the hidden layer is updated and iterated each time as follows:

$$\Delta m_{ij} = -\frac{\partial E}{\partial m_{ij}} = \left[ -\frac{\partial E}{\partial net_o^3} \frac{\partial net_o^3}{\partial y_j^2} \frac{\partial y_j^2}{\partial m_{ij}} \right] = \delta_o w_j y_j^2 \frac{2\left(x_i^1 - m_{ij}\right)}{\left(\sigma_{ij}\right)^2} \tag{15}$$

a correction amount of the Gaussian function average of the hidden layer each time is as follows:

$$m_{ij}(k+1) = m_{ij}(k) + \eta_m \Delta m_{ij} \tag{16}$$

wherein $\eta_m$ is a learning rate of the Gaussian function average.

A Gaussian function standard deviation of the hidden layer is updated and iterated each time as follows

$$\Delta \sigma_{ij} = -\frac{\partial E}{\partial \sigma_{ij}} = \left[ -\frac{\partial E}{\partial net_o^3} \frac{\partial net_o^3}{\partial y_j^2} \frac{\partial y_j^2}{\partial \sigma_{ij}} \right] = \delta_o w_j y_i^2 \frac{2\left(x_i^1 - m_{ij}\right)^2}{\left(\sigma_{ij}\right)^3} \tag{17}$$

A correction amount of the Gaussian function standard deviation of the hidden layer each time is as follows:

$$\sigma_{ij}(k+1) = \sigma_{ij}(k) + \eta_\sigma \Delta \sigma_{ij}$$

(18)

where $\eta_\sigma$ is a learning rate of the Gaussian function standard deviation.

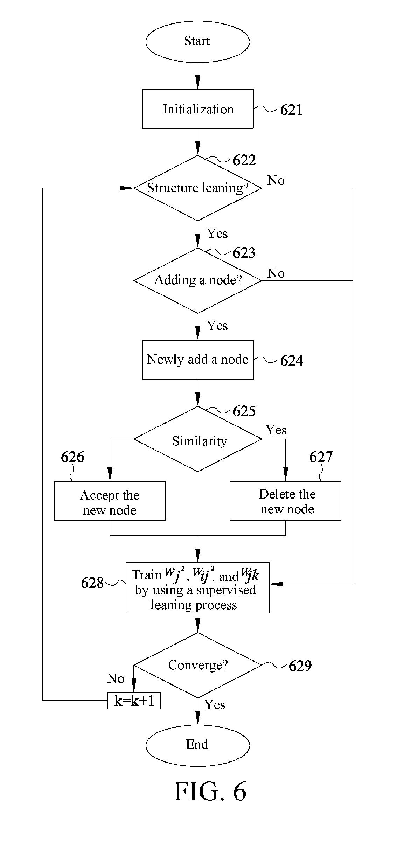

In the process flow chart shown in FIG. 6, a recurrent supervised leaning and leaning process (RRBFN) 62 of on-line learning includes:

(a) Step 621: initializing a RBFN variable, and entering Step 622; (b) Step 622: evaluating whether to enter a structure leaning process, and if yes, entering Step 623, otherwise, entering Step 628; (c) Step 623: evaluating whether to add a new membership function node, if yes, entering Step 624, and if no, entering Step 628; (d) Step 624: adding a new node, and entering Step 625; (e) Step 625: performing a test of the similarity between the new node and other nodes; (f) Step 626: accepting the new node, and entering Step 628; 2 2 (g) Step 627: deleting the new node, and entering Step 628; (h) Step 628: training $w_j^2$, $w_{ij}^2$, and $w_{jk}$ by using a supervised leaning process; and (i) Step 629: performing a convergence test to determine whether the error function is minimized, if yes, stopping the on-line learning, and if no, entering Step 622 for re-iteration.

The PSS module provided in the novel hybrid AVR of the present invention can stabilize the power output of the generator, and also stabilize the output when multiple generator sets operate in parallel, so as to improve the stability of the overall grid of the system, as shown in FIG. 7. The present invention is applicable to the development of an optimum algorithm for power output configuration of a hybrid smart grid.

The contribution of the hybrid algorithm for the AVR provided in the present invention is that the fuzzy sliding mode control and the RBFN are hybridized and used as the driver of the power system stabilizer to control the output power. Through hybrid control of the two modes, the power generation system can operate at a stable power. Related power disturbance simulation test conducted with a test sample proves that compared with a conventional proportional-integral PI control method, the control method provided in the present invention is rapid, can control the output of the generator in real time in the case of disturbance occurred to the power system, and has a good stability and performance.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1. A hybrid automatic voltage regulation and power stabilization control system for a generator, comprising:

   a generator, for generating a voltage and an output power;
   a control device, for generating a voltage regulation signal and a power stabilization signal by a fuzzy sliding mode control algorithm and an algorithm of a recurrent radial basis function network (RRBFN) of synchronous on line learning; and
   an excitation system, coupled to the generator and the control device, for receiving the voltage regulation signal and the power stabilization signal to control the generator, so as to stabilize the voltage and the output power generated by the generator.

2. A hybrid automatic voltage regulation and power stabilization control system for a generator, comprising:

   a first group of generator sets, connected in parallel; and
   a second group of generator sets, connected in parallel, wherein the second group of generator sets is electrically connected to the first group of generator sets by a power transmission line;
   wherein each generator set further comprises:

   a generator, for generating a voltage and an output power;
   a control device, coupled to the generator, for generating a voltage regulation signal and a power stabilization signal by fuzzy sliding mode control and a recurrent radial basis function network (RRBFN) of synchronous on line learning; and;
   an excitation system, coupled to the generator, for receiving the voltage regulation signal and the power stabilization signal to control the generator, so as to stabilize the voltage and the output power generated by the generator, and stabilize the power when the distributed first and second groups of generator sets operate in parallel.

3. The hybrid automatic voltage regulation and power stabilization control system for a generator according to claim 1 or 2, wherein the control device further comprises a pair of control modules that monitor and support each other, and each control module comprises:

an automatic voltage regulator (AVR), coupled to the excitation system, for generating the voltage regulation signal according to an algorithmic result of the fuzzy sliding mode control, and feeding back the voltage regulation signal to the excitation system; and
a power system stabilizer (PSS), coupled to the excitation system and connected to the AVR, for generating the power stabilization signal having a variable system frequency (rotation speed) or a variable effective power according to the RRBFN of the synchronous on line learning, and feeding back the power stabilization signal to the excitation system, so as to compensate insufficient damping after quick response of the excitation system, wherein the PSS has an under-compensation design, so as to avoid the decrease of synchronous torque at the same time, and enhance the damping of the system dynamic stability of the generator, thereby increasing the transient stability of the generator.

4. The hybrid automatic voltage regulation and power stabilization control system for a generator according to claim 3, wherein the PSS further uses at least one signal of a rotation speed deviation, a power deviation, and a frequency deviation as an additional control signal, and feeds back the additional control signal to the excitation system, so as to compensate the quick response of the excitation system.

5. The hybrid automatic voltage regulation and power stabilization control system for a generator according to claim 1 or 2, wherein the fuzzy sliding mode control comprises
a controller related variable:

$$x_1(t) = \Delta\omega(t) \qquad\qquad \dot{x}_1(t) = -\dot{\omega}_r(t) = -x_2(t)$$

wherein
$\Delta\omega$ is an angular velocity difference of a rotor; and
$\omega_r$ is an angular velocity of the rotor of the generator; and a steady state power output of the generator is as follows:

$$\begin{bmatrix} \dot{x}_1(t) \\ \dot{x}_2(t) \end{bmatrix} = \begin{bmatrix} 0 & -1 \\ 0 & -B/J \end{bmatrix}\begin{bmatrix} x_1(t) \\ x_2(t) \end{bmatrix} + \begin{bmatrix} 0 \\ -K_t/J \end{bmatrix}i(t) + \begin{bmatrix} 0 \\ 1/J \end{bmatrix}\dot{T}_m$$

which is expressed as

$$\dot{X}(t) = AX(t) + BU(t) + D\dot{T}_m$$

wherein:

$$A = \begin{bmatrix} 0 & -1 \\ 0 & -B/J \end{bmatrix}, \quad B = \begin{bmatrix} 0 \\ -K_t/J \end{bmatrix}, \quad D = \begin{bmatrix} 0 \\ 1/J \end{bmatrix}, \quad U(t) = \dot{i}(t)$$

wherein $J$ is an inertia moment;
$T_m = K_t i(t)$ is a mechanical torque; and

*B* is a friction coefficient of the generator.

6. The hybrid automatic voltage regulation and power stabilization control system for a generator according to claim 5, wherein for the device in the system, when disturbance is considered in the fuzzy sliding mode control, the equation is expressed as follows:

$$\dot{X}(t) = (A + \Delta A)X(t) + (B + \Delta B)U(t) + (D + \Delta D)\dot{T}_m$$

wherein $\Delta A$, $\Delta B$, and $\Delta D$ are expressed by parameters *J, B, $K_t$,* and *$T_m$,* and the equation is rewritten as:

$$\dot{X}(t) = AX(t) + B(U(t) + F(t))$$

wherein *F(t)* is an integrated variation factor and is expressed as follows:

$$F(t) = B^{-1}\Delta A X(t) + B^{-1}\Delta B U(t) + B^{-1}(D + \Delta D)\dot{T}_m$$

and F(t) is a switch interface in overall operation, and is directly expressed by system parameters *A* and *B*.

7. The hybrid automatic voltage regulation and power stabilization control system for a generator according to claim 4, where the control device uses the fuzzy sliding mode control and the RBFN as the driving control of the PSS, and preferentially transfers the additional control signal to the excitation system, so as to lower the system transient by increasing the system damping.

8. The hybrid automatic voltage regulation and power stabilization control system for a generator according to claim 1 or 2, wherein the RRBFN of the synchronous on line learning comprises:

   (a) the control device implementing an algorithm of the RBFN; and
   (b) the control device implementing a synchronous on line learning algorithm.

9. The hybrid automatic voltage regulation and power stabilization control system for a generator according to claim 8, wherein the algorithm of the RBFN has the adaptation ability, and is applicable to a nonlinear system.

10. The hybrid automatic voltage regulation and power stabilization control system for a generator according to claim 8, wherein the algorithm of the RBFN comprises:

   (a) a first input layer;
   wherein for an *$i$*th nerve cell in the first input layer, input and output are as follows:

$$net_i^1 = x_i^1(N)$$

$$y_i^1(N) = f_i^1(net_i^1(N)) = net_i^1(N) \quad i = 1,2$$

   wherein

   $x_i^1$ is an input signal of the first input layer;

   $y_i^1$ is an output signal of the first input layer;

   $f_i^1$ is a transition function of the first input layer;

$N$ is a number of iterations of the RBFN; and
$net^1_i$ is a first-layer network node function;

(b) a second hidden layer;
wherein a basis function form of the second hidden layer is a Gaussian function, when the input signal of the first input layer is input into the RBFN, the first input layer transfers an input vector to each radial basis function in the second hidden layer, that is, after a distance from the input vector to a central point of each nerve cell in the second hidden layer is calculated, the Gaussian function is transformed to obtain an output from each nerve cell in the second hidden layer, and the input and output are as follows:

$$net^2_j(N) = -(X - M_j)^T \sum_j (X - M_j)$$

$$y^2_j(N) = f^2_j\left(net^2_j(N)\right) = exp\left(net^2_j(N)\right)$$

wherein

$$M_j = \begin{bmatrix} m_{1j} & m_{2j} & \cdots & m_{ij} \end{bmatrix}^T, \quad \sum_j = diag\begin{bmatrix} 1/\sigma^2_{1j} & 1/\sigma^2_{2j} & \cdots & 1/\sigma^2_{ij} \end{bmatrix}^T$$

$y^2_j$ is an output signal of the second hidden layer;

$f^2_j$ is a transform function in the second hidden layer;

$m_{ij}$ is an average of an $i^{th}$ nerve cell corresponding to a function to which a $j^{th}$ nerve cell belongs in the hidden layer;
$\sigma_{ij}$ is a standard deviation of an $i^{th}$ nerve cell corresponding to a function to which a $j^{th}$ nerve cell belongs in the hidden layer;
$net^2_j$ is a second-layer network node function; and
$N$ is the number of iterations of the RBFN; and
(c) a third output layer, for totaling all signals input into a nerve cell in the third output layer, wherein for an $o^{th}$ nerve cell in the output layer, input and output of the third output layer are as follows:

$$net^3_o = \sum_j w_j y^2_j(N)$$

$$y^3_o(N) = f^3_o\left(net^3_o(N)\right) = net^3_o(N)$$

wherein

$y^2_j$ is an output signal of the second hidden layer; $y^3_o$ is an output signal of the third output layer;

$f_0^3$ is a transition function of the third output layer;
$w_j$ is a weight of a $j^{th}$ nerve cell in the second hidden layer to the output layer;
$net^3_0$ is a third-layer network node function; and
$N$ is the number of iterations of the RBFN.

11. The hybrid automatic voltage regulation and power stabilization control system for a generator according to claim 8, wherein the synchronous on line learning algorithm is implementing, by the control device, a supervised learning and learning process, and in a recursive stage, a weight of the RBFN is corrected according to an algorithm of a law of gradient descent, and by the correction of the weight, the output of the RBFN approaches an expected output value.

12. The hybrid automatic voltage regulation and power stabilization control system for a generator according to claim 8, wherein the synchronous on line learning algorithm is a leaning algorithm based on a dynamic back-propagation algorithm; and the control device calculates a back-propagated error by using the third output layer first, and a calculation formula of the error is:

$$E = \frac{1}{2} \left( P_w - P_m \right)^2$$

wherein:

E is an error function;
$P_w$ is an expected output power; and
$P_m$ is an actual on line output power;
and then the control device calculates a linking weight and a learning rate by using the third output layer and the second hidden layer, wherein the linking weight is updated and iterated each time as follows:

$$\delta_o = -\frac{\partial E}{\partial net_o^3} = \left[ -\frac{\partial E}{\partial y_o^3} \frac{\partial y_o^3}{\partial net_o^3} \right]$$

$$\Delta w_j = -\frac{\partial E}{\partial w_j} = \left[ -\frac{\partial E}{\partial y_o^3} \frac{\partial y_o^3}{\partial net_o^3} \right] \left( \frac{\partial net_o^3}{\partial w_j} \right) = \delta_o y_j^2$$

wherein
$\delta_o$ is a back-propagated error;
$w_j$ is a linking weight;

$y_j^2$ is an output signal of the second hidden layer;

$y_o^3$ is an output signal of the third output layer; and

*E* is an error function;
wherein the linking weight $w_j$ may be adjusted according to a formula below:

$$w_j(N+1) = w_j(N) + \eta_w \Delta w_j$$

wherein, $\eta_w$ is a learning rate of a weight between the third output layer and the second hidden layer; and
the control device calculating the linking weight and the learning rate in the second hidden layer comprises the calculation of a Gaussian function average and a Gaussian function standard deviation.

13. The control system according to claim 12, wherein when the control device calculates the linking weight and the learning rate in the second hidden layer, a variation of the Gaussian function average is updated and iterated each time as follows:

$$\Delta m_{ij} = -\frac{\partial E}{\partial m_{ij}} = \left[ -\frac{\partial E}{\partial net_o^3} \frac{\partial net_o^3}{\partial y_j^2} \frac{\partial y_j^2}{\partial m_{ij}} \right] = \delta_o w_j y_j^2 \frac{2\left(x_i^1 - m_{ij}\right)}{\left(\sigma_{ij}\right)^2}$$

a variation of the Gaussian function standard deviation is updated and iterated each time as follows:

$$\Delta \sigma_{ij} = -\frac{\partial E}{\partial \sigma_{ij}} = \left[ -\frac{\partial E}{\partial net_o^3} \frac{\partial net_o^3}{\partial y_j^2} \frac{\partial y_j^2}{\partial \sigma_{ij}} \right] = \delta_o w_j y_i^2 \frac{2\left(x_i^1 - m_{ij}\right)^2}{\left(\sigma_{ij}\right)^3}$$

wherein
$w_j$ is the linking weight;
$\delta_o$ is the back-propagated error,
$\sigma_{ij}$ is an average of an $i^{th}$ nerve cell corresponding to a function to which a $j^{th}$ nerve cell belongs in the hidden layer
$m_{ij}$ is an average of an $i^{th}$ nerve cell corresponding to a function to which a $j^{th}$ nerve cell belongs in the hidden layer;

$y_j^2$ is the output signal of the second hidden layer;

$x_i^1$ is the input signal of the first input layer;

$net^3_0$ is the third-layer network node function; and
$E$ is the error function;
a correction amount of the Gaussian function average of the second hidden layer each time is as follows:
$m_{ij}(k+1)=m_{ij}(k)+\eta_m \Delta m_{ij}$
wherein $\eta_m$ is a learning rate of the Gaussian function average; and
a correction amount of the Gaussian function standard deviation of the second hidden layer each time is as follows:

$\sigma_{ij}(k+1)=\sigma_{ij}(k)+\eta_\sigma \Delta \sigma_{ij}$
wherein $\eta_\sigma$ is a learning rate of the Gaussian function standard deviation.

14. The hybrid automatic voltage regulation and power stabilization control system for a generator according to claim 8, wherein the RRBFN of the on-line learning is that the control device initializes a recurrent neural network (RNN) variable; the control device evaluates whether to enter a structure leaning process, and if yes, further evaluates whether to add a new membership function node, and if yes, a new node is added; the control device tests similarity between the new node and other nodes, if the nodes are not similar, the new node is accepted; the control device trains $w_j^2$, $T_m$, and $w_{jk}$ by using a supervised leaning process; and the control device performs a convergence test to determine whether the error function is minimized, if yes, the on-line learning is stopped, and if no, re-iteration is performed by returning to the evaluation of whether to enter a structure leaning process.

15. The hybrid automatic voltage regulation and power stabilization control system for a generator according to claim 14, wherein when the control device evaluates whether to enter the structure leaning process or evaluates whether to add a new membership function node, if the result is no, the supervised leaning process is directly used to train $w_j^2$, $T_m$, and $w_{jk}$, and the control device performs a convergence test to determine whether the error function is minimized.

FIG. 1

FIG. 2

FIG. 3

FIG. 4

$$P_W$$

$$+ \quad P_m$$

$$G \quad 61$$

Recurrent supervised leaning and leaning process — 62

$$y_0^3$$

$$\Sigma$$

Output layer o

$$W_j$$

41  42  $$y_j^2$$  43  $$y_j^2$$  44

$$\bullet\bullet\bullet\bullet\bullet$$

Hidden layer j

$$y_i^1$$

51  52

Input layer i

$$x_i^1$$

# FIG. 5

Start

Initialization — 621

622

Structure leaning? — No

Yes

623

Adding a node? — No

Yes

Newly add a node — 624

625

Similarity — Yes

626

Accept the new node

627

Delete the new node

Train $w_j^2$, $w_{ij}^2$, and $w_{jk}$ by using a supervised leaning process — 628

Converge? — 629

No

k=k+1

Yes

End

## FIG. 6

311   321   331   341

G1   31   G2   32   G3   33   G4   34

Group 1   Group 2   Group 3   Group 4

•••

Transmission line

FIG. 7

Europäisches
Patentamt

European
Patent Office

Office européen
des brevets

# EUROPEAN SEARCH REPORT

Application Number

EP 12 18 3616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | NECHADI E ET AL: "A new robust adaptive fuzzy sliding mode power system stabilizer", INTERNATIONAL JOURNAL OF ELECTRICAL POWER & ENERGY SYSTEMS, JORDAN HILL, OXFORD, GB, vol. 42, no. 1, 11 March 2012 (2012-03-11), pages 1-7, XP028405269, ISSN: 0142-0615, DOI: 10.1016/J.IJEPES.2012.03.032 [retrieved on 2012-04-16] * the whole document * | 1-15 | INV. G05B13/02 F03D7/02 H02P9/00 |
| A | BANDAL V ET AL: "Output Feedback Fuzzy Sliding Mode Control Technique Based Power System Stabilizer (PSS) For Single Machine Infinite Bus (SMIB) System", INDUSTRIAL TECHNOLOGY, 2005. ICIT 2005. IEEE INTERNATIONAL CONFERENCE ON HONG KONG 14-17 DEC. 2005, PISCATAWAY, NJ, USA,IEEE, 14 December 2005 (2005-12-14), pages 341-346, XP010897662, DOI: 10.1109/ICIT.2005.1600661 ISBN: 978-0-7803-9484-1 * the whole document * -----  -/-- | 1-15 | TECHNICAL FIELDS SEARCHED (IPC) G05B F03D H02P |

The present search report has been drawn up for all claims

| Place of search | Date of completion of the search | Examiner |
|---|---|---|
| Munich | 11 February 2013 | Schriefl, Josef |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

**EUROPEAN SEARCH REPORT**

Application Number

EP 12 18 3616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JUNG-WOOK PARK ET AL: "Comparison of MLP and RBF neural networks using deviation signals for indirect adaptive control of a synchronous generator", PROCEEDINGS OF THE 2002 INTERNATIONAL JOINT CONFERENCE ON NEURAL NETWORKS. IJCNN'02. HONOLULU, HAWAII, MAY 12 - 17, 2002; [INTERNATIONAL JOINT CONFERENCE ON NEURAL NETWORKS], NEW YORK, NY : IEEE, US, vol. 1, 12 May 2002 (2002-05-12), pages 919-924, XP010590980, DOI: 10.1109/IJCNN.2002.1005597 ISBN: 978-0-7803-7278-8 * the whole document * | 1-15 | |
| A | RAVI SEGAL ET AL: "Radial Basis Function (RBF) Network Adaptive Power System Stabilizer", IEEE TRANSACTIONS ON POWER SYSTEMS, IEEE SERVICE CENTER, PISCATAWAY, NJ, US, vol. 15, no. 2, 1 May 2000 (2000-05-01), XP011050990, ISSN: 0885-8950 * the whole document * | 1-15 | |
| A | YIU-MING CHEUNG: "A new recurrent radial basis function network", NEURAL INFORMATION PROCESSING, 2002. ICONIP '02. PROCEEDINGS OF THE 9T H INTERNATIONAL CONFERENCE ON NOV. 18-22, 2002, PISCATAWAY, NJ, USA,IEEE, vol. 2, 18 November 2002 (2002-11-18), pages 1032-1036, XP010638877, ISBN: 978-981-04-7524-6 * the whole document * ----- -/-- | 1-15 | TECHNICAL FIELDS SEARCHED (IPC) |

The present search report has been drawn up for all claims

| Place of search | Date of completion of the search | Examiner |
|---|---|---|
| Munich | 11 February 2013 | Schriefl, Josef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 12 18 3616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WHEI-MIN LIN ET AL: "Hybrid intelligent control of PMSG wind generation system using pitch angle control with RBFN", ENERGY CONVERSION AND MANAGEMENT, vol. 52, no. 2, 1 February 2011 (2011-02-01), pages 1244-1251, XP055022513, ISSN: 0196-8904, DOI: 10.1016/j.enconman.2010.09.020 * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 11 February 2013 | Schriefl, Josef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)